# EUROPEAN PATENT SPECIFICATION

(11) **EP 0 686 079 B1**
(45) Date of publication and mention of the grant of the patent: **15.03.2000**
(21) Application number: 93914101.6
(22) Date of filing: 25.05.1993
(51) Int. Cl.: B29B 9/12, C08J 3/12, B29K 27/18

(54) **POLYTETRAFLUOROETHYLENE MOLDING POWDER AND PROCESSES**
POLYTETRAFLUORÄTHYLENFORMPULVER UND VERFAHREN FÜR DESSEN HERSTELLUNG
POUDRE DE MOULAGE EN POLYTETRAFLUOROETHYLENE ET PROCEDES ASSOCIES

(30) Priority: 23.02.1993 US 21409
(43) Date of publication of application: 13.12.1995
(73) Proprietor: W.L. GORE & ASSOCIATES, INC., Newark, Delaware 19714-9206 (US)
(72) Inventor: DOLAN, John, w., Boothwyn, PA 19061-1816 (US); SINGLETON, Charles, E., Wilmington, DE 19803 (US)
(74) Representative: Kador & Partner
(86) International application number: US9304905
(87) International publication number: WO9419162

(56) References cited:
- EP-A- 0 106 180
- GB-A- 1 082 859

## Description

### FIELD OF THE INVENTION

This invention relates to polytetrafluoroethylene molding powders useful in compression molding techniques.

### BACKGROUND OF THE INVENTION

Polytetrafluoroethylene (PTFE) is made in two distinct forms by different processes. One form is the so-called "fine powder" form produced by polymerizing tetrafluoroethylene in an emulsion so that the polymer particles do not precipitate. After polymerization is complete the particles are coagulated. This form of PTFE cannot be compression molded.

On the other hand, the so-called granular form of polytetrafluoroethylene is produced by polymerization of tetrafluoroethylene and precipitation in situ as the polymerizate forms. This form of polytetrafluoroethylene can be compression molded by taking the polymer powder, filling a mold, compressing the powder in the mold while heating it to coalesce the powder, and then removing the compressed powder from the mold. The resulting molded articles are not as strong as desired and ways of making stronger molded articles of polytetrafluoroethylene are continually sought after.

This state of the art is represented by GB-A-1,082,859.

### SUMMARY OF THE INVENTION

In this invention a new form of polytetrafluoroethylene has been found to be compression moldable and to provide strong molded articles.

The new form is a compression molding powder comprised of comminuted, sheared particles of expanded porous polytetrafluoroethylene, said particles having a bulk density of between .06 and .2 g/cc, a nudular-microfibrillar structure of irregular shape, and a mean particle size between 5 and 500 micrometers.

One process of this invention is an improvement in the process for molding articles from polytetrafluoroethylene in which polytetrafluoroethylene granular powder is placed in a mold, compressed, removed from the mold, and sintering at above 327°C; in which the invention is the improvement which comprises employing as the polytetrafluoroethylene, particles obtained from porous, stretched polytetrafluoroethylene (ePTFE) that has been comminuted by grinding to an average size of between about 40 and 100 micrometers.

The particles are comminuted by grinding and have an irregular and rugged shape obtained by the shearing motion of the grinding.

### BRIEF DESCRIPTION OF THE DRAWINGS

Figure 1 is a temperature/pressure trace of an autoclave cycle during mold of the molding powder of the invention.
Figure 2 is stress vs. strain graph of form different PTFE molding resins.

### DETAILED DESCRIPTION OF THE INVENTION

It is well known to stretch polytetrafluoroethylene (PTFE) sheet or tape to form microporous expanded PTFE (ePTFE) that is characterized by nodes interconnected by fibrils. A general procedure for this stretching technique is described in USP 3,953,566. Once a sheet, tape, tube or rod of stretched porous PTFE is obtained, particles of the sheet or tape are produced by shredding or chopping porous expanded PTFE, (unsintered or sintered) to reduce it to small pieces, e.g. of about 5 to 10 millimeters largest dimension. These particles are then ground in water between closely spaced grinding surfaces to obtain sheared and ground particles of porous expanded PTFE, then separating the sheared and ground particles from the water and drying the particles. Preferably the porous expanded PTFE that is used in this invention was expanded at least 8:1 times its original length and more preferably 50:1 or more. There is no upper limit on degree of stretching. Any suitable apparatus for grinding or comminuting tough polymeric or elastomeric materials may be used for producing the porous expanded PTFE particles, such as the apparatus disclosed in US-A-4614310 and US-A-4841623.

This apparatus employs two parallel stones having a hole in the middle of the stones, affixed on a common axis but secured circumferentially and rotating at high speeds (3600 rpm) in opposite directions of each other. Material to be ground is coarsely cut and mixed with water to produce a wet slurry and then the slurry is placed in the middle of the rotating stones. The material is moved or slung by centrifugal force across the surface of the stones. A hydrodynamic layer is created between the closely spaced rotating stones and the water slurry. This hydrodynamic layer forces the particles on the stone's surface outwards across the stone. Size reduction of the particle occurs as the particle bumps into and along the stone's sharp edges located on the stone's surface as the particle travels along Its torturous path from near the center of the stone to the outside of the stone.

It is important that the gap between the stones is kept sufficiently tight so that a strong hydrodynamic layer is maintained between the stones, forcing the particles outwards. If the gap is not sufficiently tight, the particles will ride in the center of the hydrodynamic layer and not touch the stone's surface resulting in no size-reduction of the particle.

The overall amount of size reduction is a function of the stone's grit size and the time the particle is exposed to the stone. The space between the stone comes into play by maintaining a hydrodyamic layer between the stones. Once the gap between the stones is sufficiently narrow to allow size-reduction to occur, then any further gap narrowing will not lead to a decrease in particle size. However, the gap dimension is critical to the overall particle size variance. The tighter the gap between the stones after the hydrodynamic layer is created, the more consistent mean particle size is produced. This is due to the probability of particles entering and leaving the hydrodynamic layer during the grinding operation due to the strength of the hydrodynamic layer and the kinetic energy of the particle as it tranverses its path betweent he stones. The tighter the gap between the stones, the less likelihood the particle can enter into the center of the hydrodynamic layer and not be size-reduced.

The comminuted particles of porous expanded PTFE retain their nudular-fibrillar microstructure. The particles are characteristically irregularly shaped and may be somewhat ragged as a result of shearing and splitting the porous expanded PTFE pieces during the grinding process. The particles have a mean particle size of between 5 and 500 micrometers. The comminuted ePTFE material, with its high surface area and fibrillar, porous nature, is suited for use as a molding powder.

For use in the procedure for compression molding polytetrafluoroethylene, the new comminuted porous expanded PTFE is placed in a mold of a desired shape. A vacuum can be drawn, if desired, and then the material is compressed at pressures of between 1500 and 6000 psi (100 and 412 bar) at a temperature between 20° (ambient) and 380°C and for a time of between 1 second and several minutes to reach equilibrium. With the use of vacuum and heat, lesser compression loads are required to reach densities greater than 1 g/cc to full density 2.2 g/cc.

Upon removal from the hot mold, the molded article can be cooled then sintered, or can be directly sintered without cooling.

By sintering is meant that the molded article is heated above 327°C for a period of time to reach equilibrium thermally to coalesce the ePTFE particles.

In one type of molding operation, called hot isostatic molding, the comminuted, porous stretched PTFE particles are placed in a container and enclosed in an air-tight heat resistant wrapping. A vacuum is then drawn on the enclosed material to about 20 inches of mercury (670 millibar). The enclosed vacuumed material is then pressurized in an autoclave to about 200-275 psi (14-19 bar) for 30-60 minutes at 350° - 400°C. The molded part is then removed and cooled.

In another type of molding operation, called compression molding, the comminuted, porous stretched PTFE particles are placed in a mold and compressed to 1450 - 2500 psi (100 - 172 bar) at room temperature (15° - 25°C). If desired, the compression can take place when a vacuum of about is pulled on the article. If desired the compression molded article can be sintered at above the 327°C.

Using expanded PTFE that had been expanded about 30 times, the molded products had twice as much strength over non-oriented, i.e., nonexpanded, PTFE granular type molding powder. Moreover, the molding powder of this invention holds its shape after undergoing compressive load at room temperature of about 3000 psi (207 bar).

Heating of molded articles above 327°C creates a gel state which coalesces the molded particles and increases strength.

The comminuted expanded PTFE molding powder will have differing morphologies depending on the starting material. For example, if ePTFE fiber is used, the comminuted molding powder particles have an aspect ratio and appear fluffy and springy. On the other hand, molding powder particles comminuted from expanded PTFE membrane are plate-like. Flowability can be improved by partially sintering before comminution.

The expanded porous PTFE used herein can have a coating of a plastic material on it, such as a coating of a thermoplastic fluoropolymer, and in particular a copolymer of tetrafluoroethylene and hexafluoropropylene (FEP) or a copolymer of tetrafluoroethylene and perfluoro alkyl vinyl ether.

### PREPARATION OF COMMINUTED EXPANDED POROUS POLYTETRAFLUOROETHYLENE PARTICLES

Expanded porous PTFE material was cut into pieces of about 6mm (quarter inch) largest dimension in rotary cutting mill. The cut material was mixed with water to form a slurry, and the slurry fed between closely spaced grinding surfaces of a grinding mill, such as that disclosed in US-A-4841623, to crush and shear the pieces of porous expanded PTFE into particles small enough to pass through a 325 mesh screen (44 microns). The ground slurry is then filtered or centrifuged to separate the porous expanded PTFE particles from the water, and the separated finely ground particles were oven dried at from 125° to 150°C.

The product was a comminuted porous expanded PTFE material comprising finely ground particles of irregular shape.

The comminuted particles preferably will have a mean particle size between 40 and 100 um, more preferably between 80 and 100 um. Particle size was determined as follows: using a magnetic stirrer and ultrasonic agitation, 2.5 grams of milled ePTFE powder were dispersed in 60 ml isopropyl alcohol. (Ultrasonic Probe Model W-385, manufactured by Heat Systems-Ultrasonics, Inc.). Aliquots of 4-6 ml of the dispersed particles were added to approximately 250 m of circulating isopropyl alcohol in a Leeds & Northrup Microtrac FRA Particle Size Analyzer. Each analysis consisted of three 30 second runs at a sample circulation rate of 2 liters/minute during which light scattering by the dispersed particles is automatically measured and the particle size distribution automatically calculated from the measurements.

The particles will preferably have an average surface area of between 1 and 3m²/gm, as determined by specific surface area measured by a Leeds and Northrup surface area analyzer. The surface area analyzer uses the BET(1) method to calculate surface area. In this sample analysis, the desorption isotherm of a single point analysis was used to calculate the surface area.

### Example 1

Comminuted, expanded, porous PTFE material prepared as described above was placed on individual metal sheets, 14 inches by 24 inches (355 mm x 610 mm) to a thickness of approximately 1/8 inch (3 mm). A normal household food blender was used to break-up clumps of the commuted materials before being placed on the metal sheets. A flour sifter was used in aiding the laying down of the powders on the sheets uniformly. Strips of expanded porous PTFE tape 1/8 inch (3 mm) thick, 3/4 inch (19 mm) wide were placed on the perimeter of the metal sheets to stop any powder from falling off the metal sheets during the loading of the powder on the metal sheet.

The individual sheets were then stacked on top of each other and placed on a metal bed that contains holes for evacuation. A loose sheet of KAPTON® from DuPont was placed over the stacked sheets and affixed to the metal bed with high temperature silicone rubber material. The KAPTON sheet was loosely folded and attached to itself with the high temperature silicone rubber to make a collapsible envelope around the metal sheets containing the powder materials.

The bed containing the stack sheets surrounded by the collapsible KAPTON sheet was then placed in a autoclave. A vacuum hose was connected to the metal bed so that a vacuum could be drawn on the powder. The KAPTON envelope around the stacked sheets containing the powder collapses on top of the stacked sheets as a result of the vacuum drawn on the powder.

After a vacuum was obtained of at least 20 inches of mercury (677 millibar), the material was then subjected to heat and pressure. The pressure is obtained by pressurizing the autoclave with CO₂ gas. The material was subject to 250 psi (17.2 bar) pressure for approximately 55 minutes and a maximum temperature of 375°C for about 45 minutes. The typical cycle is two and one half hour in duration.

After the autoclave cycle, the bed containing the sheets was removed from the autoclave, cooled to room temperature and disassembled. The molded PTFE sheets are easily peeled from the metal sheets.

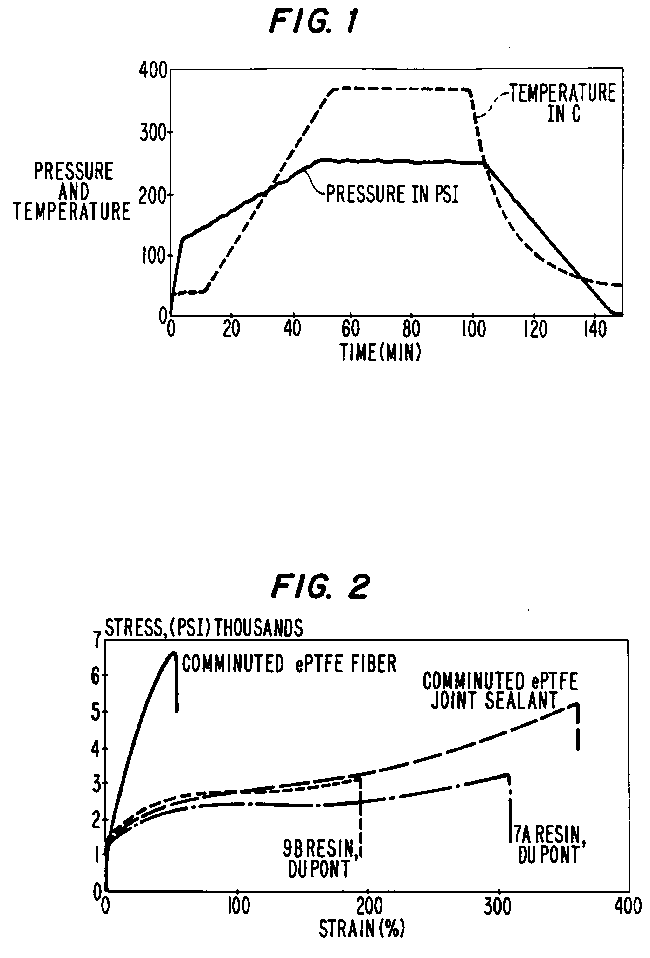

Samples subjected to the foregoing procedure were comminuted ePTFE obtained from ePTFE expanded at an 8:1 ratio; comminuted ePTFE obtained from ePTFE fiber expanded at a 80:1 ratio; DuPont Co. Granular PTFE resin 7A; and DuPont Granular PTFE resin 9B. Figure 1 is a typical trace of the autoclave cycle in which temperature and pressure are traced in real time.

Below is a table setting forth the tensile strength, young's modulus, and the ball plunger test as per ASTM 638 and ASTM 882 test methods of the above materials.

**TABLE**

| STRENGTH RESULTS | | | |
|---|---|---|---|
| Material | Tensile (psi) [bar] | Young's Modulus (psi) [bar] | Ball Plunger ASTM 0638 & ASTM D882 lbs/in (thk) [N/cm thk] |
| Comminuted | mean: 4525 [312] | mean: 56560 [3900] | 7560 |
| ePTFE 8:1 | std: 605 [42] | std: 3322 [229] | [1324] |
| Comminuted | mean: 6118 [422] | mean: 58400 [4026] | 14375 |
| ePTFE 80:1 | std: 548 [38] | std: 4835 [333] | [2517] |
| 7A PTFE | mean: 3332 [230] | mean: 41570 [2866] | 6480 |
| Resin | std: 821 [57) | std: 2845 [196] | [1135] |
| 9B PTFE | mean: 3161 [218] | mean: 49420 [3407] | 7755 |
| Resin | std: 425 [29] | std: 2759 [190] | [1358] |

As shown in the above table, the samples of expanded, porous PTFE that were comminuted and molded using a hot isostatic molding process, exhibited increased tensile strength and young's modulus over non-expanded materials undergoing the same hot isostatic molding process. The highly oriented (80:1) ePTFE unsintered material that was comminuted and processed using the hot isostatic process forming sheet samples was twice as strong (Tensile Strength & 1 inch (25.4 mm) Ball Plunger as per Test ASTM D638 and ASTM D882) as sheets formed in a similar manner consisting of granular polytetrafluoroethylene resins 7A & 9B from DuPont.

The increased strength of the molded article consisting of the comminuted expanded, porous PTFE is believed to be the result of retention of the strength of the original oriented PTFE structure which posses high strength which was imparted by the expansion process. The comminuting process reduces the oriented structure having high strength into small particles which apparently remain oriented (for each particle in itself) and thus each particle has high strength as well.

Figure 2 is a stress-strain plot comparing the products of this example after processing by the Hot Isostatic molding process. It is evident from Figure 2 that the overall stress-strain behavior of the PTFE may be affected by the history (thermal, mechanical, etc.) of the PTFE before the molding process. The shape of molded comminuted expanded, porous PTFE fiber stress-strain locust is shown to be different from the other loci. The locust is concave down (i.e. 2nd derivative is negative, hence a decreasing stress/strain ratio) with no inflection point as shown in the other three loci.

### Example II

A three-dimensional shape was produced hot-isostatically using comminuted unsintered GORE-TEX® joint sealant. The shape consists of a 4.0 inch (101.6 mm) hollow cylindrical base capped off by a 4.0 inch (101.6 mm) dome. The overall height was 3 1/2 inch (88.9 mm).

A six part aluminum die was machined to produce the three-dimensional part. A concave and cylindrical plunger section that was used for compressing the powder against the convexed base of the die assembly and four curved plates for compressing the powder against the cylindrical section of the plunger (quarter sections).

The die filled with the unsintered comminuted expanded, porous PTFE was wrapped in a KAPTON bag and placed into the autoclave. A vacuum was drawn to at least 26 inches (88 K Pascal) of mercury within the bag where the die was located thus subjecting the powder to the vacuum. Heat and pressure were applied to the die with similar conditions as in Example I using the autoclave cycle outlined.

After the heat, pressure, vacuum, and cooling operation, the article was removed from the autoclave. The die was disassembled and the molded article was removed from the aluminum die.

### Example III

A coating of comminuted expanded, porous PTFE material was placed on a 6 inch (152 mm) x 12 inch (305 mm) long aluminum drum using the hot-isostatic process. A tube having an inside diameter of 6.25 (159 mm) was placed over the 6 inch (152 mm) x 12 inch (305 mm) long aluminum drum which was standing on end on top of a rigid table. Comminuted unsintered expanded, porous PTFE (joint sealant) was filled in the 1/8 inch (3 mm) gap between the tube and drum. During the filling operation, a thin wall tube having an outside diameter of 6.22 inch (158 mm) and an inside diameter of 6.06 inch (154 mm) was placed in between the two articles tapping down the expanded, porous PTFE powder by hand. When the die assembly was filled with the expanded, porous PTFE powder, the die was placed in a press. Using the thin wall tube, the powder was subjected to a 100 psi (690 K Pascal) pressure in the axial direction of the aluminum drum. This pressing operation made the ePTFE powder semirigid around the drum and allowed for easy handling of the drum for further operations.

Four 12 inch (305 mm) long quarter panels having each an inside radius of approximately 3.1 inch (78.7 mm) were taped equally spaced to the outside of the drum using high temperature KAPTON Adhesive tape. A bag of KAPTON sheet material was made into a large loose envelope. The drum coated with the comminuted expanded, porous PTFE powder having the four quarterpanel strapped to it, was placed in the KAPTON bag and sealed suing high temperature silicone rubber.

A fitting was placed through one side of the KAPTON bag so to draw a vacuum inside the bag. The base assembly was then placed in the autoclave and subjected to heat, pressure, and vacuum with similar conditions as stated in Example I. Following the autoclave process, the drum was cooled to room temperature and the four quarter panels were removed. The resulting structure was a drum coated with PTFE having four ridges equally spaced along the axis of the drum which protruded from the coating. The ridges are the result of the interfacing of the four quarter panels as the panels moved towards the enter axis the drum during the compression operation in the autoclave.

The PTFE coating on the drum was then machined on the lathe using tool steel as the cutting tool. The PTFE coating machined very nicely producing a smooth uniform finish.

The coating on the drum did not rotate or move on the drum during the cutting/turning operation. This means the coating was securely affixed to the drum, even though no adhesive was used to bond the PTFE to the aluminum drum. It is doubtful that there exists a chemical bond between the two materials based on the chemical inertness of the PTFE. It is believed that the bond is a frictional bond between the two surfaces resulting from the thermal expansion of the two materials during the autoclave operation but especially due to the retractive qualities of the PTFE through thermal cycling.

### Example IV

Comminuted expanded porous PTFE was molded using the die form compression method. Placing comminuted expanded, porous PTFE powder in a die and compressing the material to 1500 psi (10.34 M Pascal) or greater yielded rigid shapes. Greater loads such as 2500 psi (17.24 Mega Pascal) that the powder was subjected to tends to produce articles having densities near to full density PTFE at 2.2 grams/cc. The use of vacuum also aides In the densification aspect of compression die molding to reduce the void content of the article. The shape of the article depends on the shape of the compression die. Further strength can be gained by sintering the molded PTFE article at a temperature between 327°C and PTFE's sublimation temperature. Using the die-form compression process, the material Is able to hold a shape after undergoing a compressive load at room temperature of about 3000 psi (20.68 Mega Pascal) restrained in the desired shape. As typical of molded PTFE articles, substantial strength is imparted to the molded article upon heating above the melt temperature (327°C) thus placing the article in the gel state thereby coalescing the particles and then, cooling the article below the melt temperature. Moreover, the sintered PTFE article can be post formed as well by heating.

### Maintaining the Oriented PTFE Structure

It is shown by Differential Scanning Calorimetry (DSC) that hot-isostatically molded articles of comminuted expanded, porous PTFE demonstrate a molecular transition of about 379°C which suggests an oriented PTFE structure. A hot-isostatically molded article consisting of comminuted PTFE membrane, the endothermic energy measured during the first heat at the about 379°C transition was 0.27 cal/gram verses 6.52 cal/gram at the about 328°C transition during the same trace.

A Thermogravimetric Analysis (TGA) was performed on the comminuted ePTFE material to determine whether any contaminates were present. No contaminant was found between 40° to 840°C.

## Claims

1. A molding powder comprised of comminuted, sheared particles of expanded, porous polytetrafluoroethylene, said particles having a bulk density of between 0.6 and 0.2 g/cc, a nudular-microfibrillar structure of irregular shape, and a mean particle size between 5 micrometers and 500 micrometers.

2. The molding powder of claim 1 wherein the particles have a coating of a thermoplastic fluoropolymer on at least a portion of the particle.

3. The molding powder of claim 2 wherein the fluoropolymer is a copolymer of tetrafluoroethylene and hexafluoropropylene.

4. A process for molding articles from polytetrafluoroethylene which comprises placing into a mold a molding powder in accordance with any of claims 1 to 3, compressing the powder therein and removing it therefrom, and sintering the compressed, removed powder at above 327°C.

5. Process for preparing the molding powder of claim 1 which comprises subjecting expanded porous polytetrafluoroethylene, which has been expanded by stretching it by at least an 8:1 stretch ratio and which has been divided into particles of 10 millimeters or less, to a grinding force until particles having an irregular shape and a size of between 5 and 500 micrometers are obtained.

## Patentansprüche

1. Formpulver, das sich aus fein zerkleinerten, gescherten Partikeln aus gedehntem porösen Polytetrafluarethylen zusammensetzt, wobei besagte Partikel eine Schüttdichte zwischen 0,6 und 0,2 g/cm³, eine nodulare Mikrifibrillenstruktur mit irregulärer Form und eine mittlere Partikelgröße zwischen 5 und 500 µm aufweisen.

2. Formpulver nach Anspruch 1, dadurch gekennzeichnet daß die Partikel eine Beschichtung aus einem thermoplastischen Fluorpolymer an wenigstens einem Teil der Partikel aufweisen.

3. Formpulver nach Anspruch 1, dadurch gekennzeichnet, daß das Fluorpolymer ein Copolymer aus Tetrafluorethylen und Hexafluorpropylen ist.

4. Verfahren zur Formung von Gegenständen aus Polytetrafluorethylen, das das Einbringen eines Formpulvers gemäß jedem der Ansprüche 1 bis 3 in eine Form, das Pressen des Pulvers hinein und Entfernen daraus und das Sintern des gepreßten entfernten Pulvers bei über 327 °C umfaßt.

5. Verfahren zur Herstellung des Formpulvers gemäß Anspruch 1, das das Unterwerfen des gedehnten porösen Polytetrafluorethylens, das durch Strecken bei zumindest einem Streckverhältnis von 8 : 1 gedehnt wurde und das in Partikel von 10 mm oder weniger geteilt wurde, einer Mahlkraft umfaßt, bis die Partikel eine irreguläre Form haben und eine Größe zwischen 5 und 500 µm erhalten wird.

## Revendications

1. Poudre de moulage constituée de particules broyées et cisaillées de polytétrafluoréthylène expansé poreux, lesdites particules ayant une masse volumique apparente comprise entre 0,6 et 0,2 g/cm³, une structure nodulaire et microfibrillaire de forme irrégulière et une granulométrie moyenne de 5 à 500 µm.

2. Poudre de moulage selon la revendication 1, dans laquelle les particules possèdent un revêtement de polymère fluoré thermoplastique sur au moins une partie de la particule.

3. Poudre de moulage selon la revendication 2, dans laquelle le polymère fluoré est un copolymère de tétrafluoréthylène et d'hexafluoropropylène.

4. Procédé de moulage d'articles à partir de polytétrafluoréthylène qui comprend les étapes consistant à placer dans un moule une poudre de moulage selon l'une quelconque des revendications 1 à 3, comprimer la poudre à l'intérieur et l'en retirer, et fritter la poudre comprimée retirée à une température supérieure à 327 °C.

5. Procédé de préparation de la poudre de moulage selon la revendication 1, qui comprend les étapes consistant à soumettre le polytétrafluoréthylène expansé poreux qui a été expansé en l'étirant selon un rapport d'étirement de 8/1 et qui a été divisé en particules de 10 millimètres ou moins, à une force de broyage jusqu'à obtention de particules de forme irrégulière et d'une dimension de 5 à 500 µm.
